(19) Europäisches Patentamt
European Patent Office
Office européen des brevets

(11) **EP 3 608 737 B1**

(12) **EUROPÄISCHE PATENTSCHRIFT**

(45) Veröffentlichungstag und Bekanntmachung des Hinweises auf die Patenterteilung:
**16.11.2022  Patentblatt 2022/46**

(21) Anmeldenummer: **18187524.6**

(22) Anmeldetag: **06.08.2018**

(51) Internationale Patentklassifikation (IPC):
***G05B 19/404*** (2006.01)

(52) Gemeinsame Patentklassifikation (CPC):
**G05B 19/404;** G05B 2219/37391;
G05B 2219/37619; G05B 2219/45143

(54) **BESTIMMUNG MINDESTENS EINER UMFORMPROZESSKENNZAHL EINER SERVOPRESSE**

DETERMINING AT LEAST ONE REFORMING PROCESS INDICATOR OF A SERVO PRESS

DÉTERMINATION D'AU MOINS UN INDICATEUR DE PROCESSUS DE FORMAGE D'UNE SERVOPRESSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.02.2020  Patentblatt 2020/07**

(73) Patentinhaber: **Siemens Aktiengesellschaft 80333 München (DE)**

(72) Erfinder:
• **Dietz, Bernd 91074 Herzogenaurach (DE)**
• **Reichl, Gerald 91056 Erlangen (DE)**
• **Schäfers, Elmar 90763 Fürth (DE)**
• **Stöckel, Tina 91088 Bubenreuth (DE)**

(56) Entgegenhaltungen:
**EP-A1- 2 048 556**         **WO-A1-2008/119090**
**DE-A1-102013 105 468**     **DE-T2- 69 529 526**

**Beschreibung**

Die Erfindung betrifft ein Verfahren zur Bestimmung mindestens einer Umformprozesskennzahl einer Servopresse sowie eine Analyseeinheit zur Ermittlung einer Umformprozesskennzahl einer Servopresse.

Auf dem Gebiet der Umformtechnik sind Pressen und insbesondere Servopressen bekannt, welche ein Werkstück oder ein zu bearbeitendes Gut aus einem bestimmten Material in einem Umformprozess umformen. Das Material wird dabei beispielsweise in einer Form gepresst. Bei diesem Umformvorgang wirkt eine Umformkraft oder Prozesskraft auf das Werkstück. Weitere für einen Umformprozess kennzeichnenden Werte sind beispielsweise technologische Kenngrößen wie Umformkraft über einen Umformweg, eine Umformenergie, eine Umformleistung über einem Umformweg oder eine Genauigkeit einer Umformbewegung. Bislang stehen solche technologischen Kenngrößen nur in Fällen fest, in welchen eine zusätzliche externe Messtechnik an einer Pressenanlage angebracht ist. Eine solche Messung an einer laufenden Presse ist sehr aufwändig. Überdies muss eine solche Messung spezifisch an eine Servopresse angepasst werden.

Die Offenlegungsschrift DE102013105468A1 zeigt ein Verfahren zur Steuerung einer Presse mit variabler Getriebeübersetzung. Eine Steuereinrichtung vergleicht ein jeweils anliegendes Antriebsmoment mit einem positionsabhängigen Maximaldrehmoment. Sobald das Antriebsmoment das positionsabhängige Maximaldrehmoment überschreitet, wird daraus die Gefahr erkannt, dass die vom Stößel aufgebrachte Kraft die maximale Presskraft bei einer fortgesetzten Umformbewegung überschreiten wird. Die Steuereinrichtung reduziert dann das Antriebsmoment um eine Beschädigung der Presse zu vermeiden.

Vor diesem Hintergrund ist es eine Aufgabe der vorliegenden Erfindung, ein verbessertes und vereinfachtes Verfahren zur Bestimmung einer Umformprozesskennzahl einer Servopresse bereitzustellen. Diese Aufgabe wird durch die Gegenstände der unabhängigen Ansprüche gelöst. Vorteilhafte Ausgestaltungen sind in den abhängigen Ansprüchen angegeben.

Die Erfindung betrifft ein Verfahren zur Bestimmung mindestens einer Umformprozesskennzahl einer Servopresse, umfassend zumindest die folgenden Schritte:

- Bestimmen eines zu einem ersten Zyklus der Servopresse zugehörigen Drehmomentverlaufes eines Motors der Servopresse, wobei der erste Zyklus einen Umformprozess ohne ein durch die Servopresse zu bearbeitendes Gut beschreibt;

- Bestimmen eines zu einem zweiten Zyklus der Servopresse zugehörigen Drehmomentverlaufes des Motors der Servopresse, wobei der zweite Zyklus einen Umformprozess mit einem durch die Servopresse zu bearbeitenden Gut beschreibt;

- Ermitteln der mindestens einen Umformprozesskennzahl aus einem Abgleich des zu dem ersten Zyklus zugehörigen Drehmomentverlaufes mit dem zu dem zweiten Zyklus zugehörigen Drehmomentverlauf, wobei die Umformprozesskennzahl aus einer Abweichung, die zwischen dem Drehmomentverlauf des ersten Zyklus und dem Drehmomentverlauf des zweiten Zyklus besteht, ermittelt wird, wobei die Umformprozesskennzahl eine Funktion des Weges oder der Zeit ist oder aus einem Verlauf von Umformprozesskenngrößen ermittelt wird, und wobei die ermittelte Umformprozesskennzahl mit mindestens einer ReferenzUmformprozesskennzahl oder mit einem Bereich von Referenz-Umformprozesskennzahlen verglichen wird und eine Anzeige ausgelöst wird, wenn der Vergleich eine Abweichung oder eine Abweichung um einen vorgegebenen Schwellenwert ergibt.

Aus der steuerungsintern verfügbaren Information über das Drehmoment des Servopressenmotors kann der Drehmomentverlauf über der Zeit dargestellt werden. Somit wird das wirkende Drehmoment in einem Zyklus der Servopresse beschrieben. Ein Zyklus beschreibt dabei beispielsweise einen Hub. Als erster Zyklus wird dabei ein Zyklus bezeichnet, bei welchem die Servopresse einen Hub durchführt, ohne dass dabei ein zu bearbeitendes Gut oder ein Werkstück umgeformt wird. Die Servopresse ist dabei quasi leer oder nicht mit einem zu pressenden Material befüllt. Als zweiter Zyklus wird ein gesamter Hub oder Hubvorgang der Servopresse bezeichnet, bei dem durch die Servopresse ein zu bearbeitendes Gut verformt wird. Die Begriffe erster Zyklus und zweiten Zyklus sollen dabei keinen zeitlichen Zusammenhang implizieren. Die Reihenfolge oder der Zeitpunkt sollte zumindest in der Theorie auf den erwarteten Drehmomentverlauf keinen merklichen Einfluss haben.

Die beiden Drehmomentverläufe, d.h. der zu dem ersten Zyklus zugehörigen Drehmomentverlauf und der zu dem zweiten Zyklus zugehörige Drehmomentverlauf, über einen gesamten Zyklus einer Servopresse unterscheiden sich gerade in der Zeitspanne, in welcher der Umformprozess stattfindet. Dabei wird insbesondere angenommen, dass der jeweilige Drehmomentverlauf über einen vergleichbaren Zeitraum aufgetragen wird, d.h. beispielsweise jeweils startend und endet bei einem identischen Kurbelwinkel. Somit liegen die Zeitspannen, in denen die Umformung stattfindet bzw. stattfinden würde aber aufgrund des Leerlaufs nicht durchgeführt wird, in einem gemeinsamen Diagramm aufgetragen übereinander. Gleiches gilt für eine Analyse der Werte der Drehmomentverläufe in anderer Art als mittels Diagrammen, beispielsweise beim Einsatz von Tabellen. Abweichungen lassen sich dann entsprechend für die Werte feststellen, die jeweils das Drehmoment zum Zeitpunkt des tatsächlich oder theoretisch stattfindenden Umformvorganges beschreiben.

Der Drehmomentverlauf in dem Zeitabschnitt, in welchem der Umformprozess stattfindet, verläuft bei deutlich höheren Werten für das Durchlaufen des zweiten Zyklus mit Umformprozess als der Drehmomentverlauf, wie er im ersten Zyklus ohne Umformprozess beobachtet werden kann.

Die Abweichung, die zwischen dem Drehmomentverlauf des ersten Zyklus und dem Drehmomentverlauf des zweiten Zyklus besteht, ist geeignet, zumindest eine oder mehrere Umformprozesskennzahlen zu ermitteln.

Der Abgleich des zu dem ersten Zyklus zugehörigen Drehmomentverlaufes mit dem zu dem zweiten Zyklus zugehörigen Drehmomentverlauf kann Abweichungen ergeben, welche je nach Servopresse und/oder je nach zu bearbeitendem Gut unterschiedlich und/oder charakteristisch sind. Insbesondere kann die ermittelte Umformprozesskennzahl über einen erwarteten Ablauf der Umformung Auskunft geben. Beispielsweise wird ein bestimmter zeitlicher Verlauf der Abweichung erwartet je nach Servopresse oder Servopressentyp und/oder je nach Werkstück.

Unter der Umformprozesskennzahl ist auch ein Verlauf von Umformprozessgrößen dargestellt über eine weitere Größe, beispielsweise über eine Zeit oder über einen Weg, zu verstehen. Beispielsweise werden mehrere Umformprozesskennzahlen ermittelt und dargestellt oder die Umformprozesskennzahl ist eine Funktion des Weges oder der Zeit. Ferner kann eine Umformprozesskennzahl aus einem Verlauf von Umformprozesskenngrößen ermittelt werden, beispielsweise durch Integration oder sonstige Berechnungsschritte. Die Umformprozesskennzahl oder deren Verlauf als Funktion der Zeit oder des Ortes kann auch als Fingerabdruck bezeichnet werden. Ein solcher Fingerabdruck kann beispielsweise über ein Edge-Gerät oder direkt in eine Cloud gesendet werden, in der ein Vergleich mit Fingerabdrücken vergleichbarer Servopressen, Werkzeuge oder Materialien stattfindet. Beispielsweise können so bei einem Vergleich mit Daten aus der Cloud Korrelationen festgestellt werden, welche auf typische Umformprozesskennzahlen bei bestimmten Umformprozessbedingungen hinweisen.

Somit können vorteilhafterweise Erkenntnisse zur Optimierung der Servopresse oder eines Umformprozesses gewonnen werden. Die Umformprozesskennzahl kann zur Überwachung der Servopresse oder des Umformprozesses genützt werden.

Gemäß einer Ausgestaltung wird der zu dem ersten Zyklus zugehörige Drehmomentverlauf mittels einer Messung an der Servopresse oder einer baugleichen oder typgleichen Servopresse bestimmt. Somit wird die Servopresse quasi im Leerlauf betrieben, um den zugehörigen Drehmomentverlauf ohne Umformprozess aufzuzeichnen. Eine solche Messung kann beispielsweise einmalig in einer Inbetriebnahme- oder Testphase der Servopresse und des Steuerungssystems der Servopresse erfolgen. Für das spätere Ermitteln der Umformprozesskennzahl wird dann diese Messung als Referenzmessung verwendet. Beispielsweise kann nach einer Vielzahl von Umformvorgängen der Messprozess für den zu dem ersten Zyklus zugehörigen Drehmomentverlauf wiederholt werden, insbesondere um Alterungseffekte an der Servopresse oder einem Werkzeug der Servopresse berücksichtigen zu können.

Für die Messung im Leerlauf ist zu beachten, dass eine später für die Umformung gewünschte Hubzahl eingestellt wird, damit ein Vergleich der Drehmomente sinnvoll möglich ist.

Gemäß einer Ausgestaltung wird der zu dem ersten Zyklus zugehörige Drehmomentverlauf mittels einer Berechnung anhand eines Modells, insbesondere eines mechatronischen Modells, der Servopresse bestimmt. Auf vorteilhafte Weise ist ein Drehmomentverlauf eines Motors an der Servopresse über ein Modell möglichst exakt nachbildbar. In einem einfachsten Modell geht dabei nur die Kinematik der Servopresse ein. Beispielsweise wird in einem einfachen Ansatz eine Auswirkung von Regeldifferenzen auf den Drehmomentverlauf vernachlässigt. Diese Annahme ist insbesondere bei typischen Servopressen zulässig, da die Bewegungsdynamik oder die Hubzahl im Vergleich zur Regeldynamik sehr gering ist. Regelfehler sind somit relativ klein. Auf vorteilhafte Weise ist somit eine theoretische Bestimmung des Drehmomentverlaufes an einem Motor einer Servopresse ohne Umformprozess möglich. Insbesondere ist das Drehmomentverhalten von Servopressen über detaillierte mechatronische Modelle besonders realistisch nachbildbar.

Gemäß einer Ausgestaltung wird der zu dem zweiten Zyklus zugehörige Drehmomentverlauf mittels einer Messung an der Servopresse bestimmt. Der Drehmomentverlauf während eines Zyklus, bei dem ein Umformprozess stattfindet, ist gerade nicht theoretisch berechenbar. Insbesondere ist der Drehmomentverlauf des ersten Zyklus mit dem Drehmomentverlauf des zweiten Zyklus gut vergleichbar, wenn das Drehmoment jeweils anhand einer Messung bestimmt wurde. Unregelmäßigkeiten oder Abweichungen, welche durch ein Modell nicht abgebildet werden, gehen beim Vergleich der beiden Drehmomentverläufe mit und ohne Umformprozess gleichermaßen ein. Bei einem Vergleich des zu dem zweiten Zyklus zugehörigen Drehmomentverlaufes mit einem zu dem ersten Zyklus zugehörigen Drehmomentverlauf, welcher über ein Modell ermittelt wurde, können auf vorteilhafte Weise Unregelmäßigkeiten aus einem Messvorgang ohne Umformprozess keine Auswirkung haben.

Gemäß einer Ausgestaltung wird als Umformprozesskennzahl eine Umformkraft über einen Weg oder über einer Zeit ermittelt. Somit ist der Verlauf der Kraft als ein Fingerprint ermittelbar und beispielsweise speicherbar. Dabei kann ein für die Umformung benötigtes Drehmoment über eine ermittelte Kinematikübersetzung der Presse in eine Kraft umgerechnet werden, die der Presskraft oder Prozesskraft entspricht. Die Kinematikübersetzung ergibt sich als Ableitung des Hubwegs des Stößels in Abhängigkeit von dem Kurbelwinkel eines Exzenters nach dem Kurbelwinkel. Die Darstellung kann über einen Weg oder über eine Zeit erfolgen und ist insbesondere ineinander umrechenbar. Dies kann insbesondere vorteilhafterweise davon abhängig gemacht werden, welche Referenzdaten zur Verfügung stehen.

Gemäß einer Ausgestaltung wird als Umformprozesskennzahl eine maximale Umformkraft ermittelt. Das Maximum einer über den Hubweg ermittelten Prozesskraft entspricht der maximalen Umformkraft, die insbesondere zu einem Zeitpunkt wirkt. Somit können vorteilhafterweise Schwellen für eine geforderte maximal auftretende Umformkraft vorgegeben werden und mittels der Prozesskraftüberwachung kann das Überschreiten einer Obergrenze festgestellt werden. Ein Werkstück, das mit überschrittener Presskraft umgeformt wurde, kann dann beispielsweise als Ausschuss behandelt werden.

Gemäß einer Ausgestaltung wird als Umformprozesskennzahl eine aufgebrachte Energie pro Hub ermittelt. Auf vorteilhafte Weise sind aus der Auswertung der beiden Drehmomentverläufe integrale Werte wie die aufgebrachte Energie pro Hub ermittelbar. Insbesondere wird dadurch der Wert der Energie ermittelt, welcher aufgrund der Umformung aufgebracht werden muss. Es handelt sich um eine Angabe einer Energie pro umgeformtem Werkstück.

Gemäß einer Ausgestaltung wird als Umformprozesskennzahl eine Umformleistung über einen Weg oder über eine Zeit ermittelt. Über den Zusammenhang der aufgebrachten Energie und der Zeit eines Zyklus oder eines Bereichs des Zyklus ist somit eine Aussage über die mit der Umformung verbundene Leistung vorteilhaft möglich. Auf vorteilhafte Weise sind Darstellungen wie ein Verlauf der aufgebrachten Umformleistung über den Weg, insbesondere dem Hubweg des Stößels, oder über der Zeit, insbesondere über der in einem Zyklus ablaufenden Zeit, möglich.

Gemäß einer Ausgestaltung wird als Umformprozesskennzahl eine maximale Umformleistung pro Hub ermittelt. Gerade Spitzenleistungen, die in einer Servopresse auftreten, sind in einem Umformprozess relevante Größen. Deren Überwachung und Beschränkung ist vorteilhaft für den Betrieb einer Servopressenanlage.

Gemäß einer Ausgestaltung gehen in das mechatronische Modell eine kinematische Beziehung zwischen Stößel und Exzenter und ein Zusammenhang zwischen Drehmoment und Strom sowie insbesondere ferner eine Trägheit von Exzenter und/ oder Antriebsstrang, eine Masse eines Stößels, ein Gewichtsausgleich, eine festlegbare Reibung oder ein Antriebsregler ein.

Somit ist es möglich, in einem modellbasierten Ansatz eine möglichst realitätsgetreue Abbildung des Drehmomentverlaufes während eines Zyklus der Servopresse ohne eine stattfindende Umformung zu berechnen. In das Modell gehen insbesondere die Faktoren ein, die zur reinen Bewegung der Presse ohne Umformung erforderlich sind.

Gemäß einer Ausgestaltung wird der zu dem ersten Zyklus der Servopresse zugehörige Drehmomentverlauf mittels einer Störübertragungsfunktion unter Berücksichtigung messbarer Regeldifferenzen des Antriebsreglers korrigiert. Dazu werden Regeldifferenzen gemessen und mittels einer Inversion einer Störübertragungsfunktion aus den gemessenen Regeldifferenzen wirkende Störkräfte ermittelt. Solche Störkräfte wirken sich auf die Messgrößen aus und können beispielsweise bei einem Zyklus ohne Umformung auftreten. Diese Korrektur kommt vorteilhaft bei einer Messung des Drehmomentverlaufes im Leerlauf zum Einsatz.

Gemäß einer Ausgestaltung wird der zu dem zweiten Zyklus der Servopresse zugehörige Drehmomentverlauf mittels einer Störübertragungsfunktion unter Berücksichtigung messbarer Regeldifferenzen des Antriebsreglers korrigiert. Auch für die Kurve des Drehmomentverlaufs, die bei stattfindender Umformung ermittelbar ist, treten Störkräfte auf, die der Antriebsregler auszugleichen hat. Die daraus resultierbaren Regeldifferenzen können unter Zuhilfenahme der Inversion der Störübertragungsfunktion Rückschlüsse auf die Prozesskraft zulassen. Die Kraft ist also nicht direkt aus den Strömen ableitbar, sondern das gemessene Drehmoment beinhaltet Ungenauigkeiten aufgrund der Regler.

Auf besonders vorteilhafte Weise werden beide Drehmomentverläufe, welche für den Abgleich verwendet werden, in Hinblick auf durch Störkräfte hervorgerufene Regeldifferenzen korrigiert. Auf diese Weise kann der Reglereffekt, welcher sich für den Drehmomentverlauf mit und ohne Umformprozess unterschiedlich auswirkt, vorteilhaft berücksichtigt werden und es tritt keine Verfälschung aufgrund der Differenzen auf. Der Drehmomentverlauf für den Fall ohne Umformung kann mittels der gemessenen Regeldifferenzen und mit Hilfe der Inversen der Störübertragungsfunktion sowohl für den Fall einer Messung im Leerlauf als auch für den Fall einer Nachbildung des Drehmomentverlaufes durch Modell berücksichtigt werden. In letzterem Fall geht der Störbeitrag insbesondere direkt in das Modell ein.

Die ermittelte Umformprozesskennzahl wird mit mindestens einer Referenzumformprozesskennzahl oder mit einem Bereich von Referenzumformprozesskennzahlen verglichen und eine Anzeige ausgelöst, wenn der Vergleich eine Abweichung oder eine Abweichung um einen vorgegebenen Schwellenwert ergibt. Somit kann der Umformprozess überwacht werden, indem auf bekannte und als gut befundene Referenzwerte zurückgegriffen wird. Auf vorteilhafte Weise wird ein Bereich angegeben, innerhalb dessen sich eine ermittelte Umformprozesskennzahl bewegen sollte. Abweichungen sind auf vorteilhafte Weise bis zu einem festlegbaren Wert möglich oder lösen insbesondere kein weiteres Ereignis wie beispielsweise eine Anzeige oder Fehlermeldung aus. Insbesondere erfolgt das Ermitteln der Umformprozesskennzahl, der Vergleich mit der Referenzumformprozesskennzahl und falls nötig eine Anzeige bei jedem Umformvorgang oder jedem Hubzyklus, beispielsweise auch unabhängig von einer stattfindenden Umformung.

Die Erfindung betrifft ferner eine Analyseeinheit zur Ermittlung einer Umformprozesskennzahl einer Servopresse, aufweisend:

- Eine erste Einheit zum Bestimmen eines zu einem ersten Zyklus der Servopresse zugehörigen Drehmomentverlaufes eines Motors der Servopresse, wobei der erste Zyklus einen Umformprozess ohne einen durch die Servopresse zu bearbeitendes Gut beschreibt;
- eine zweite Einheit zum Bestimmen eines zu einem zweiten Zyklus der Servopresse zugehörigen Drehmomentverlaufes des Motors der Servopresse, wobei der zweite Zyklus einen Umformprozess mit einem durch die Servopresse zu bearbeitenden Gut beschreibt;
- eine dritte Einheit zum Ermitteln der mindestens einen Umformprozesskennzahl aus einem Abgleich des zu dem ersten Zyklus zugehörigen Drehmomentverlaufes mit dem zu dem zweiten Zyklus zugehörigen Drehmomentverlauf. Gemäß einer Ausgestaltung ist die Analyseeinheit integriert in eine Servopressensteuerung ausgebildet, sowie zum Vergleichen der ermittelten Umformprozesskennzahl mit mindestens einer Referenz-Umformprozesskennzahl oder mit einem Bereich von Referenz-Umformprozesskennzahlen und zum Auslösen einer Anzeige, wenn der Vergleich eine Abweichung oder eine Abweichung um einen vorgegebenen Schwellenwert ergibt.

Gemäß einer Weiterbildung weist die Analyseeinheit ferner eine Anzeigeeinheit zur Anzeige einer ermittelten Abweichung der ermittelten Umformprozesskennzahl von einer Referenzumformprozesskennzahl oder einem Bereich von Referenzumformprozesskennzahlen auf. Beispielsweise ist ein Monitor vorgesehen, über den ein Status darstellbar ist. Beispielsweise wird lediglich eine Fehlermeldung angezeigt, welche beispielsweise in Form einer leuchtenden Lampe signalisiert wird. Alternativ können über den Monitor Details wie die Umformprozesskennzahl selbst oder eine aufgezeichnete Historie von Umformprozesskennzahlen angezeigt werden.

Die Analyseeinheit ist gemäß einer Ausgestaltung ferner mit einer Schnittstelle zu einem Edgegerät oder einem Clouddienst versehen zum Senden von ermittelten Umformprozesskennzahlen oder von ermittelten Umformprozesskennzahlen und zugehörigen Servopressen- oder Material- oder Prozesskennzahlen und/oder zum Empfangen von Referenzumformprozesskennzahlen oder anhand von gesendeten ermittelten Umformprozesskennzahlen durch einen Clouddienst ausgewertet Handlungsempfehlungsdaten.

Auf vorteilhafte Weise wird so ein Steuerungssystem bereitgestellt, welches einen charakteristischen Fingerabdruck für einen Umformprozess bestimmt und zur Anzeige bringt. Durch eine Verbindung zu einem Edgegerät oder einer Cloud wird eine Speicherung eigener ermittelter Fingerabdrücke und vorteilhafterweise auch ein Vergleich mit eigenen früheren Fingerabdrücken oder Fingerabdrücken vergleichbarer Umformvorgänge andere Betreiber von Servopressenanlagen ermöglicht. Beispielsweise werden mit Hilfe von Cloudanwendungen Korrelationen zu auftretenden Umformprozesskennzahlen und Material oder Werkzeug etc. ermittelt und können von einem Betreiber der Servopresse genutzt werden zur Verbesserung der Einstellungen oder Prozesse an der eigenen Presse.

Die Erfindung betrifft ferner ein Computerprogrammprodukt mit einem Computerprogramm, das Mittel zur Durchführung des Verfahrens nach einem der oben beschriebenen Ausführungsformen aufweist, wenn das Computerprogramm auf einer programmgesteuerten Einrichtung zur Ausführung gebracht wird.

Die Erfindung wird nachfolgend anhand von Ausführungsbeispielen mit Hilfe der Figuren näher erläutert. Es zeigen:

Figur 1     eine schematische Darstellung eines Drehmomentverlaufes bei einem Zyklus ohne Umformprozess und mit Umformprozess in einem gemeinsamen Diagramm gemäß einem Ausführungsbeispiel der Erfindung;

Figur 2     eine schematische Darstellung einer ermittelten Prozesskraft über einem Umformweg;

Figur 3     eine schematische Darstellung der Kinematik einer Servopresse;

Figur 4     eine schematische Darstellung der Kinematikübersetzung der Servopresse.

In einem ersten Ausführungsbeispiel der Erfindung wird eine besonders vorteilhafte Realisierung einer Prozessüberwachung einer Servopressen beschrieben, bei welcher für eine Umformprozessdiagnose eines Umformprozesses mittels einer Servopresse auf Daten aus einem Modell zurückgegriffen wird. Zur Überwachung des Umformvorganges soll auf eine Umformkennzahl zurückgegriffen werden können. Diese Umformkennzahl gibt Aussage darüber, ob ein Prozess ordnungsgemäß durchgeführt wird. Dazu wird das Verhalten einer Servopresse ohne stattfindende Umformung verglichen mit dem Verhalten derselben Servopresse mit Umformvorgang, d.h. mit in der Presse eingelegtem oder ggf. transportiertem Material, welches umgeformt oder gepresst wird.

Das Verhalten der Servopresse mit Umformprozess wird auf Basis eines gemessenen Drehmomentverlaufes und das ohne Umformprozess auf Basis eines berechneten Drehmomentverlaufes untersucht und daran anschließend eine Weiterverarbeitung der Werte der jeweiligen Drehmomentverläufe durchgeführt.

Zunächst ist dazu für die Servopresse ein Drehmomentverlauf zu ermitteln, wie er ohne eingelegtes Material, d.h. ohne Umformprozess, zu erwarten ist. Dafür wird Modellwissen über die Presse herangezogen, welches die Trägheiten von einem Exzenter und einem Antriebsstrang der Servopresse, die Masse des Stößels der Servopresse, eine kinematische Beziehung zwischen Stößel und Exzenter, eine Betrachtung des Gewichtsausgleiches, eine als bekannt anzunehmende Reibung und ggf. weitere modellierte Größen berücksichtigt. Je nach Typ der Servopresse geht beispielsweise eine Exzenterkinematik ein oder eine Kinematik, wie sie für eine Schleppkurbel-Servopresse oder eine Kniehebel-Servopresse oder eine Linkdrive-Servopresse angenommen werden kann.

Neben den Parametern, welche in das Pressenmodell eingehen, sind zudem vorteilhafterweise Regeldifferenzen zu berücksichtigen. Über ein zusätzliches Reglermodell kann vorteilhaft der berechnete Drehmomentverlauf korrigiert werden. In das Reglermodell gehen Parameter ein, die auf Grund der Antriebsregler stattfindende Verzögerungen in der Regelung widerspiegeln.

Zudem ist, in zeitlicher beliebiger Reihenfolge zur Ermittlung des Drehmomentverlaufes ohne Umformprozess, auch ein Drehmomentverlauf bei stattfindender Umformung zu ermitteln. Dies geschieht über eine Messung. In einem Bereich der Umformung wird sich beim Abgleich der beiden ermittelten Drehmomentverläufe ein deutlicher Unterschied zeigen. Dieser Unterschied kommt durch die für die Umformung aufzubringende Kraft zustande.

Auch die gemessene Kurve des Drehmomentverlaufes mit Umformung wird um Ungenauigkeiten aufgrund von Regeldifferenzen, die bei der Messung während der Umformung ermittelt wurden, korrigiert. Dazu wird mittels einer Inversen einer Störübertragungsfunktion die Veränderung des Drehmomentes aufgrund der verbauten Antriebsregler herausgerechnet.

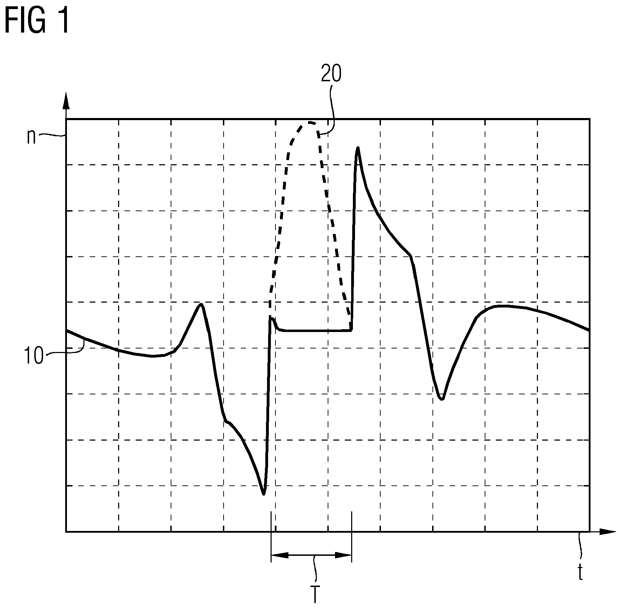

In Figur 1 sind beide Drehmomentverläufe exemplarisch abgebildet. Eine durchgezogene Kurve veranschaulicht den Drehmomentverlauf 10, der zu einem ersten Zyklus der Servopresse gehört und in welchem keine Umformung stattfindet. Die strichlinierte Kurve zeigt den Drehmomentverlauf 20, der zu einem zweiten Zyklus mit Umformprozess zugehörig ist im relevanten Abschnitt der stattfindenden Umformung. Die Kurven veranschaulichen den Verlauf der Drehmomente, wobei auf der Hochwertachse das Drehmoment n abgebildet ist in Abhängigkeit von einer Zeit t, welche auf der Rechtwertachse dargestellt ist.

Im zeitlichen Bereich der Umformungzeitspanne T ist eine starke Abweichung zu bemerken, welche auf die Umformung zurückzuführen ist. Außerhalb dieses Bereichs ist eine in etwa gleichlaufende Kurve zu beobachten. Wie gut die Kurven außerhalb der Umformungzeitspanne T übereinanderliegen, hängt insbesondere von der Güte des gewählten Modells ab. Ferner kann eine Abweichung auftreten, wenn die modellierte Kurve beispielsweise unter Vernachlässigung bestimmter Parameter wie beispielsweise Reibung oder auftretenden Regeldifferenzen berechnet wurde.

Der Bereich außerhalb des Umformvorganges dient somit auch als Referenzbereich zur Abschätzung der Güte des verwendeten Modells.

Für die Ermittlung der Umformprozesskennzahl ist der Bereich innerhalb der Umformungzeitspanne T relevant. Aus dem Vergleich der beiden Drehmomentverläufe 10, 20 lässt sich eine gewünschte Umformprozesskennzahl auf unterschiedliche Weise herleiten.

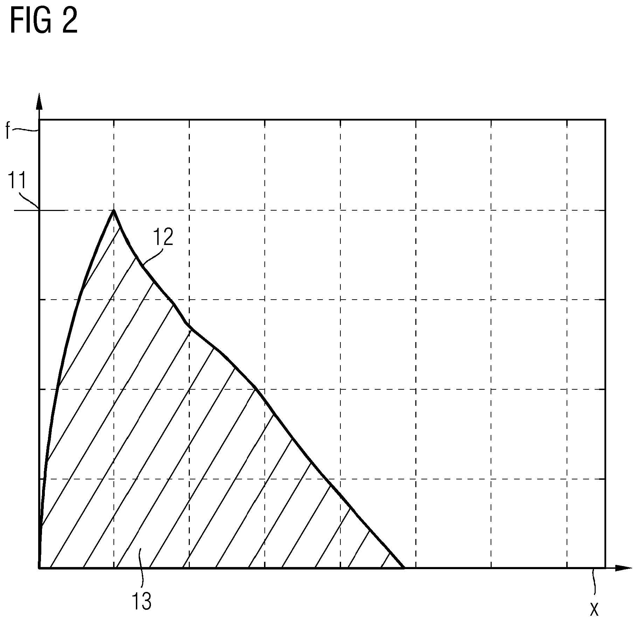

Beispielsweise soll die Presskraft aufgrund der stattfindenden Umformung über den Umformweg dargestellt werden. Dies ist in Figur 2 veranschaulicht. Dazu wird der gemessene Drehmomentverlauf im Bereich Umformungzeitspanne um den auch ohne Umformung auftretenden Verlauf der Drehmomente an den Motoren korrigiert. Somit wird lediglich die Fläche zwischen den beiden Kurven als für die Prozesskraftermittlung relevant angesehen.

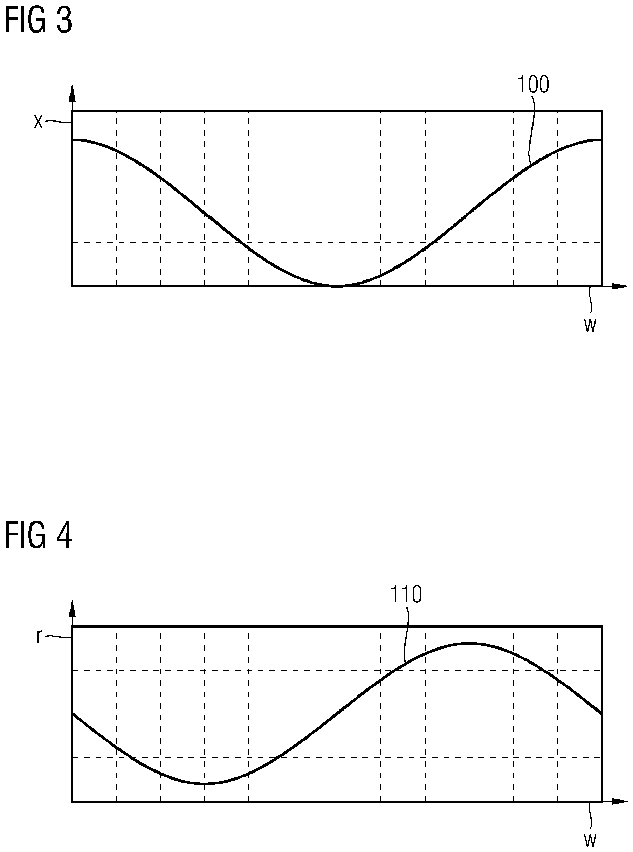

Als Zwischenergebnis ist nun ein durch die Umformung hervorgerufener Drehmomentverlauf über der Zeit vorliegend. Mit Hilfe einer für die Servopresse geltenden Kinematikübersetzung kann nun die Umrechnung in eine Prozesskraft oder Presskraft erfolgen. Figur 3 veranschaulicht dazu den Zusammenhang zwischen Kurbelwinkel eines Exzenters und damit Lageistwert des Motors und einem Hubweg des Stößels. Der Hubweg x ist auf der Hochwertachse eingetragen, der Kurbelwinkel w auf der Rechtswertachse. Somit ist hier der Verlauf 100 des Hubes über einem Hub-Zyklus dargestellt. In der Figur 3 ist der Verlauf 100 über einen Bereich von einem Kurbelwinkel w von 0° bis zu einem Kurbelwinkel w von 360° dargestellt.

Figur 4 zeigt die Kinematikübersetzung 110, d.h. die Ableitung der in Figur 3 dargestellten Kurve des Hubs nach dem Kurbelwinkel w. Auf der Hochwertachse ist der wirksame Radius r dargestellt, auf der Rechtswertachse wiederum der Kurbelwinkel w. Der wirksame Radius kann auch als variable Getriebeübersetzung bezeichnet werden.

Mittels dieser Kinematikübersetzung 110 kann nun die Umrechnung des für die Umformung benötigten Drehmomentes in eine für die Umformung benötigte Kraft erfolgen. Beispielsweise ergibt die Division des Umformdrehmomentes an einem Kurbelwinkel durch die Kinematikübersezung am selben Kurbelwinkel die gesuchte Presskraft. In Formeln:

$$\text{F\_Umform(phi)} = -\ \text{M\_umform(phi)}/(\text{d x(phi)}/\text{d phi})$$

Die Darstellung kann dann wie in Figur 2 gezeigt als Prozesskraftverlauf 12 über dem Weg x erfolgen. Wiederum zeigt die Rechtswertachse den Hubweg x. Die Hochwertachse zeigt die Prozesskraft f. Diese Information kann nun zur Prozesskraftüberwachung herangezogen werden. Auf vorteilhafte Weise entfallen herkömmliche Überwachungen mit aufwendiger zusätzlicher Sensorik. Beispielsweise wird als Umformprozesskennzahl eine maximale Umformkraft 11 oder eine integrale Kenngröße wie die Umformenergie pro Umformvorgang oder pro Werkstück ermittelt, für welche das Integral 13 des Prozesskraftverlaufs 12 über den Hubweg x gebildet wird.

Ferner sind auch Umformprozesskennzahlen denkbar, welche den gesamten Hub und/oder den gesamten Zyklus eines Umformvorgangs inklusive der Abschnitte, in welcher keine Umformkraft wirkt, berücksichtigen, beispielsweise eine Gesamtenergie pro Werkstück.

Die ermittelte Kenngröße wird mit einer Referenzkenngröße verglichen. Diese wurde beispielsweise aus der Umformung eines Referenzteils gewonnen oder wird über einen Remote-Service oder Cloud-Service bereitgestellt oder ist innerhalb der Pressenanlage verfügbar. Ein Anwender spezifiziert auf vorteilhafte Weise Grenzbereiche von zulässigen Abweichungen. Werden diese überschritten, so wird ein definierter Vorgang ausgelöst, beispielsweise eine Ampelanzeige an einer Steuerung, ein Alarm oder ein Stopp einer Bearbeitung oder einer Servopresse.

Die charakteristischen Kenngrößen sowie eine Historie ermittelter Umformprozesskennzahlen, welche vorteilhafterweise wiederum als Referenzwerte dienen können, werden beispielsweise steuerungsintern gespeichert. Zusätzlich können diese Daten beispielsweise extern gesammelt werden, indem sie an einen Cloud-Service übermittelt werden.

Somit ergibt sich auf vorteilhafte Weise eine Methode zur Überwachung eines Umformprozesses. Ein charakteristischer Fingerabdruck für einen Umformprozess wird bestimmt und insbesondere zur Anzeige gebracht. Durch Wertung ermittelter Umformprozesskennzahlen, beispielsweise anhand einer Güte des umgeformten Werkstückes, kann die Überwachung mit der Zeit immer feiner ausfallen. Durch das Aufzeichnen einer Historie aus Umformprozesskennzahlen und zugehörigen Umforminformationen, wie beispielsweise dem verwendeten Material oder einem verwendeten Werkzeug, lassen sich auf vorteilhafte Weise Korrelationen feststellen.

Um ein möglichst gutes Modell des Drehmomentverlaufes an der Servopresse ohne Umformvorgang verwenden zu können, wird beispielsweise bei Inbetriebnahme der Einfluss von Größen wie Reibung oder Gewichtsausgleich bei verschiedenen Pressengeschwindigkeiten ermittelt. Damit wird das Modell parametriert und für einen später stattfindenden Umformvorgang und dessen Prozessüberwachung wird auf das Modell mit entsprechenden Parametern wie bei der Umformung zurückgegriffen.

Bereits vorhandene Daten in einer Servopressensteuerung werden verarbeitet und somit neue Kenngrößen im Umformprozess oder am Werkstück in eine auswertbare Form gebracht. Damit werden Erkenntnisse zur weiteren Optimierung der Presse oder des Prozesses gewonnen. Weiterhin können die so verarbeiteten Umformprozesskennzahlen zur Überwachung der Presse oder des Prozesses genutzt werden.

**Patentansprüche**

1. Verfahren zur Bestimmung mindestens einer Umformprozesskennzahl einer Servopresse, umfassend zumindest die folgenden Schritte:

   - Bestimmen eines zu einem ersten Zyklus der Servopresse zugehörigen Drehmomentverlaufes (10) eines Motors der Servopresse, wobei der erste Zyklus einen Umformprozess ohne ein durch die Servopresse zu bearbeitendes Gut beschreibt;
   - Bestimmen eines zu einem zweiten Zyklus der Servopresse zugehörigen Drehmomentverlaufes (20) des Motors der Servopresse, wobei der zweite Zyklus einen Umformprozess mit einem durch die Servopresse zu bearbeitenden Gut beschreibt;
   - Ermitteln der mindestens einen Umformprozesskennzahl (11, 12, 13) aus einem Abgleich des zu dem ersten Zyklus zugehörigen Drehmomentverlaufes (10) mit dem zu dem zweiten Zyklus zugehörigen Drehmomentverlauf (20), wobei die Umformprozesskennzahl (11, 12, 13) aus einer Abweichung, die zwischen dem Drehmomentverlauf des ersten Zyklus und dem Drehmomentverlauf des zweiten Zyklus besteht, ermittelt wird, wobei die Umformprozesskennzahl (11, 12, 13) eine Funktion des Weges oder der Zeit ist oder aus einem Verlauf von Umformprozesskenngrößen ermittelt wird, und wobei die ermittelte Umformprozesskennzahl (11, 12, 13) mit mindestens einer Referenz-Umformprozesskennzahl oder mit einem Bereich von Referenz-Umformprozesskennzahlen verglichen wird und eine Anzeige ausgelöst wird, wenn der Vergleich eine Abweichung oder eine Abweichung um einen vorgegebenen Schwellenwert ergibt.

2. Verfahren nach Anspruch 1, wobei der zu dem ersten Zyklus zugehörige Drehmomentverlauf (10) mittels einer Messung an der Servopresse oder einer baugleichen oder typgleichen Servopresse bestimmt wird.

3. Verfahren nach Anspruch 1, wobei der zu dem ersten Zyklus zugehörige Drehmomentverlauf (10) mittels einer Berechnung anhand eines Modells, insbesondere eines mechatronischen Modells, der Servopresse bestimmt wird.

4. Verfahren nach einem der vorstehenden Ansprüche, wobei der zu dem zweiten Zyklus zugehörige Drehmomentverlauf (20) mittels einer Messung an der Servopresse bestimmt wird.

5. Verfahren nach einem der vorstehenden Ansprüche, wobei als Umformprozesskennzahl (11, 12, 13) eine Umformkraft über einen Weg oder über einer Zeit ermittelt wird.

6. Verfahren nach einem der vorstehenden Ansprüche, wobei als Umformprozesskennzahl (11, 12, 13) eine maximale Umformkraft ermittelt wird.

7. Verfahren nach einem der vorstehenden Ansprüche, wobei als Umformprozesskennzahl (11, 12, 13) eine aufgebrachte Energie pro Hub ermittelt wird.

8. Verfahren nach einem der vorstehenden Ansprüche, wobei als Umformprozesskennzahl (11, 12, 13) eine Umformleistung über einen Weg oder über eine Zeit ermittelt wird.

9. Verfahren nach einem der vorstehenden Ansprüche, wobei als Umformprozesskennzahl (11, 12, 13) eine maximale Umformleistung pro Hub ermittelt wird.

10. Verfahren nach Anspruch 3, wobei in das mechatronische Modell eine kinematische Beziehung zwischen Stößel und Exzenter und ein Zusammenhang zwischen Drehmoment und Strom sowie insbesondere ferner eine Trägheit von Exzenter und/ oder Antriebsstrang, eine Masse eines Stößels, ein Gewichtsausgleich, eine festlegbare Reibung oder ein Antriebsregler eingehen.

11. Verfahren nach einem der vorstehenden Ansprüche, wobei der zu dem ersten Zyklus der Servopresse zugehörige Drehmomentverlauf (10) mittels einer Störübertragungsfunktion unter Berücksichtigung messbarer Regeldifferenzen des Antriebsreglers korrigiert wird.

12. Verfahren nach einem der vorstehenden Ansprüche, wobei der zu dem zweiten Zyklus der Servopresse zugehörige Drehmomentverlauf (20) mittels einer Störübertragungsfunktion unter Berücksichtigung messbarer Regeldifferenzen des Antriebsreglers korrigiert wird.

13. Analyseeinheit zur Ermittlung einer Umformprozesskennzahl (11, 12, 13) einer Servopresse, aufweisend:

   - eine erste Einheit zum Bestimmen eines zu einem ersten Zyklus der Servopresse zugehörigen Drehmomentverlaufes (10) eines Motors der Servopresse, wobei der erste Zyklus einen Umformprozess ohne ein durch die Servopresse zu bearbeitendes Gut beschreibt;
   - eine zweite Einheit zum Bestimmen eines zu einem zweiten Zyklus der Servopresse zugehörigen Drehmomentverlaufes (20) des Motors der Servopresse, wobei der zweite Zyklus einen Umformprozess mit einem durch die Servopresse zu bearbeitenden Gut beschreibt;
   - eine dritte Einheit zum Ermitteln der mindestens einen Umformprozesskennzahl (11, 12, 13) aus einem Abgleich des zu dem ersten Zyklus zugehörigen Drehmomentverlaufes (10) mit dem zu dem zweiten Zyklus zugehörigen Drehmomentverlauf (20), wobei das Ermitteln aus einer Abweichung, die zwischen dem Drehmomentverlauf des ersten Zyklus und dem Drehmomentverlauf des zweiten Zyklus besteht, erfolgt und wobei die Umformprozesskennzahl (11, 12, 13) eine Funktion des Weges oder der Zeit ist oder aus einem Verlauf von Umformprozesskenngrößen ermittelt wird, sowie zum Vergleichen der ermittelten Umformprozesskennzahl (11, 12, 13) mit mindestens einer Referenz-Umformprozesskennzahl oder mit einem Bereich von Referenz-Umformprozesskennzahlen und zum Auslösen einer Anzeige, wenn der Vergleich eine Abweichung oder eine Abweichung um einen vorgegebenen Schwellenwert ergibt.

14. Analyseeinheit nach Anspruch 13, wobei die Analyseeinheit integriert in eine Servopressensteuerung ausgebildet ist.

15. Analyseeinheit nach Anspruch 13 oder 14, ferner ausgebildet zur Durchführung des Verfahrens gemäß einem der Ansprüche 2 bis 12.

16. Analyseeinheit nach einem der Ansprüche 13 bis 15, ferner aufweisend eine Anzeigeeinheit zur Anzeige einer ermittelten Abweichung der ermittelten Umformprozesskennzahl (11, 12, 13) von einer Referenz-Umformprozesskennzahl oder einem Bereich von Referenz-Umformprozesskennzahlen.

17. Analyseeinheit nach einem der Ansprüche 13 bis 16, mit Schnittstelle zu einem Edgegerät oder einem Cloud-Dienst zum Senden von ermittelten Umformprozesskennzahlen (11, 12, 13) oder von ermittelten Umformprozesskennzahlen und zugehörigen Servopressen- oder Material- oder Prozesskennzahlen und/ oder zum Empfangen von Referenz-Umformprozesskennzahlen oder anhand von gesendeten ermittelten Umformprozesskennzahlen durch einen Cloud-Dienst ausgewerteten Handlungsempfehlungsdaten.

18. Computerprogrammprodukt mit einem Computerprogramm, das Mittel zur Durchführung des Verfahrens nach einem der Ansprüche 1 bis 12 aufweist, wenn das Computerprogramm auf einer programmgesteuerten Einrichtung zur Ausführung gebracht wird.

**Claims**

1. Method for determining at least one forming process parameter of a servo press,
   comprising at least the following steps:

   - determining a torque profile (10) of a motor of the servo press, said torque profile belonging to a first cycle of the servo press, wherein the first cycle describes a forming process without an item to be processed by the servo press;
   - determining a torque profile (20) of the motor of the servo press, said torque profile belonging to a second cycle of the servo press, wherein the second cycle describes a forming process with an item to be processed by the servo press;
   - ascertaining the at least one forming process parameter (11, 12, 13) from a comparison of the torque profile (10) belonging to the first cycle with the torque profile (20) belonging to the second cycle, wherein the forming process parameter (11, 12, 13) is ascertained from a deviation existing between the torque profile of the first cycle and the torque profile of the second cycle, wherein the forming process parameter (11, 12, 13) is a function of distance or time or is ascertained from a profile of forming process characteristics, and wherein the ascertained forming process parameter (11, 12, 13) is compared with at least one reference forming process parameter or with a range of reference forming process parameters, and an indication is triggered if the comparison yields a deviation or a deviation by a predetermined threshold value.

2. Method according to Claim 1, wherein the torque profile (10) belonging to the first cycle is determined by way of a measurement on the servo press or on a servo press of the same construction or of the same type.

3. Method according to Claim 1, wherein the torque profile (10) belonging to the first cycle is determined by means of a calculation on the basis of a model, more particularly a mechatronic model, of the servo press.

4. Method according to any one of the preceding claims, wherein the torque profile (20) belonging to the second cycle is determined by means of a measurement on the servo press.

5. Method according to any one of the preceding claims, wherein a forming force over distance or over time is ascertained as forming process parameter (11, 12, 13).

6. Method according to any one of the preceding claims, wherein a maximum forming force is ascertained as forming process parameter (11, 12, 13).

7. Method according to any one of the preceding claims, wherein an energy applied per stroke is ascertained as forming process parameter (11, 12, 13).

8. Method according to any one of the preceding claims, wherein a forming power over distance or over time is ascertained as forming process parameter (11, 12, 13).

9. Method according to any one of the preceding claims, wherein a maximum forming power per stroke is ascertained as forming process parameter (11, 12, 13).

10. Method according to Claim 3, wherein a kinematic relation between slide and eccentric plate and a relationship between torque and current and, more particularly, furthermore an inertia of the eccentric plate and/or drivetrain, a mass of a slide, a weight compensation, determinable friction or a drive controller are included in the mechatronic model.

11. Method according to any one of the preceding claims, wherein the torque profile (10) belonging to the first cycle of the servo press is corrected by means of a noise transfer function, taking account of measurable system deviations of the drive controller.

12. Method according to any one of the preceding claims, wherein the torque profile (20) belonging to the second cycle of the servo press is corrected by means of a noise transfer function, taking account of measurable system deviations of the drive controller.

13. Analysis unit for ascertaining a forming process parameter (11, 12, 13) of a servo press, comprising:

- a first unit for determining a torque profile (10) of a motor of the servo press, said torque profile belonging to a first cycle of the servo press, wherein the first cycle describes a forming process without an item to be processed by the servo press;
- a second unit for determining a torque profile (20) of the motor of the servo press, said torque profile belonging to a second cycle of the servo press, wherein the second cycle describes a forming process with an item to be processed by the servo press;
- a third unit for ascertaining the at least one forming process parameter (11, 12, 13) from a comparison of the torque profile (10) belonging to the first cycle with the torque profile (20) belonging to the second cycle, wherein the ascertainment is implemented using a deviation existing between the torque profile of the first cycle and the torque profile of the second cycle, and wherein the forming process parameter (11, 12, 13) is a function of distance or time or is ascertained from a profile of forming process characteristics, and for comparing the ascertained forming process parameter (11, 12, 13) with at least one reference forming process parameter or with a range of reference forming process parameters, and for triggering an indication if the comparison yields a deviation or a deviation by a predetermined threshold value.

14. Analysis unit according to Claim 13, wherein the analysis unit is embodied integrated in a servo press controller.

15. Analysis unit according to Claim 13 or 14, further embodied to carry out the method according to any one of Claims 2 to 12.

16. Analysis unit according to any one of Claims 13 to 15, further comprising an indication unit for indicating an ascertained deviation of the ascertained forming process parameter (11, 12, 13) from a reference forming process parameter or a range of reference forming process parameters.

17. Analysis unit according to any one of Claims 13 to 16 comprising an interface to an edge device or a cloud service for transmitting ascertained forming process parameters (11, 12, 13) or ascertained forming process parameters and associated servo press parameters or material parameters or process parameters and/or for receiving reference forming process parameters or suggested action data on the basis of transmitted ascertained forming process parameters, said suggested action data having been evaluated by a cloud service.

18. Computer program product with a computer program, having means for carrying out the method according to any one of Claims 1 to 12 when the computer program is executed on a program-controlled device.

**Revendications**

1. Procédé destiné à la détermination d'au moins un indicateur d'un processus de formage d'une servo-presse, qui comprend au moins les étapes suivantes dans lesquelles :

- on détermine une allure d'un couple de rotation (10), associée à un premier cycle de la servo-presse, d'un moteur de la servo-presse ; dans lequel le premier cycle décrit un processus de formage en l'absence d'une marchandise qui doit faire l'objet d'un traitement par l'intermédiaire de la servo-presse ;
- on détermine une allure d'un couple de rotation (20), associée à un deuxième cycle de la servo-presse, du moteur de la servo-presse ; dans lequel le deuxième cycle décrit un processus de formage qui comprend une marchandise qui doit faire l'objet d'un traitement par l'intermédiaire de la servo-presse ;

- on identifie ledit au moins un indicateur (11, 12, 13) du processus de formage à partir d'une comparaison entre l'allure (10) du couple de rotation associée au premier cycle et l'allure (20) d'un couple de rotation associée au deuxième cycle ; dans lequel on identifie l'indicateur (11, 12, 13) du processus de formage à partir d'un décalage qui existe entre l'allure du couple de rotation du premier cycle et l'allure du couple de rotation du deuxième cycle ; dans lequel l'indicateur (11, 12, 13) du processus de formage représente une fonction du parcours ou du laps de temps ou est identifié à partir d'une allure de caractéristiques d'un processus de formage ; et dans lequel on compare l'indicateur (11, 12, 13) du processus de formage qui a été identifié à au moins un indicateur d'un processus de formage de référence ou à une plage d'indicateurs de processus de formage de référence et on déclenche un affichage lorsque la comparaison révèle un décalage ou un décalage qui correspond à une valeur seuil qui a été prédéfinie.

2. Procédé selon la revendication 1, dans lequel on détermine l'allure du couple de rotation (10) associée au premier cycle au moyen d'une mesure effectuée sur la servo-presse ou sur une servo-presse de structure analogue ou du même type.

3. Procédé selon la revendication 1, dans lequel on détermine l'allure du couple de rotation (10) associée au premier cycle au moyen d'un calcul sur la base d'un modèle, en particulier d'un modèle mécatronique, de la servo-presse.

4. Procédé selon l'une quelconque des revendications précédentes, dans lequel on détermine l'allure du couple de rotation (20) associée au deuxième cycle au moyen d'une mesure effectuée sur la servo-presse.

5. Procédé selon l'une quelconque des revendications précédentes, dans lequel, au titre de l'indicateur (11, 12, 13) du processus de formage, on identifie une force de déformation qui s'exerce sur un parcours ou sur un laps de temps.

6. Procédé selon l'une quelconque des revendications précédentes, dans lequel, au titre de l'indicateur (11, 12, 13) du processus de formage, on identifie une force de déformation maximale.

7. Procédé selon l'une quelconque des revendications précédentes, dans lequel, au titre de l'indicateur (11, 12, 13) du processus de formage, on identifie une énergie qui s'applique par course.

8. Procédé selon l'une quelconque des revendications précédentes, dans lequel, au titre de l'indicateur (11, 12, 13) du processus de formage, on identifie une puissance de déformation qui se déploie sur un parcours ou sur un laps de temps.

9. Procédé selon l'une quelconque des revendications précédentes, dans lequel, au titre de l'indicateur (11, 12, 13) du processus de formage, on identifie une puissance de déformation maximale par course.

10. Procédé selon la revendication 3, dans lequel, interviennent dans le modèle mécatronique, une relation cinématique entre le poussoir et l'excentrique et un rapport entre le couple de rotation et le courant, de même que, en particulier, en outre une inertie de l'excentrique et/ou de la transmission, une masse d'un poussoir, une compensation de poids, une friction qui peut être spécifiée ou un contrôleur.

11. Procédé selon l'une quelconque des revendications précédentes, dans lequel on corrige l'allure du couple de rotation (10) associée au premier cycle de la servo-presse au moyen d'une fonction de transmission des interférences en prenant en compte des différences de réglage mesurables du contrôleur.

12. Procédé selon l'une quelconque des revendications précédentes, dans lequel on corrige l'allure du couple de rotation (20) associée au deuxième cycle de la servo-presse au moyen d'une fonction de transmission des interférences en prenant en compte des différences de réglage mesurables du contrôleur.

13. Unité d'analyse destinée à l'identification d'un indicateur (11, 12, 13) d'un processus de formage d'une servo-presse, qui présente :

- une première unité destinée à la détermination d'une allure d'un couple de rotation (10), associée à un premier cycle de la servo-presse, d'un moteur de la servo-presse ; dans lequel le premier cycle décrit un processus de formage en l'absence d'une marchandise qui doit faire l'objet d'un traitement par l'intermédiaire de la servo-presse ;

- une deuxième unité destinée à la détermination d'une allure d'un couple de rotation (20), associée à un deuxième cycle de la servo-presse, d'un moteur de la servo-presse ; dans lequel le deuxième cycle décrit un processus de formage qui comprend une marchandise qui doit faire l'objet d'un traitement par l'intermédiaire de la servo-presse ;

- une troisième unité destinée à l'identification dudit au moins un indicateur (11, 12, 13) du processus de formage à partir d'une comparaison entre l'allure (10) du couple de rotation, associée au premier cycle et l'allure (20) du couple de rotation, associée au deuxième cycle ; dans lequel l'identification a lieu à partir d'un décalage qui existe entre l'allure du couple de rotation du premier cycle et l'allure du couple de rotation du deuxième cycle ; et dans lequel l'indicateur (11, 12, 13) du processus de formage représente une fonction du parcours ou du laps de temps ou est identifié à partir d'une allure de caractéristiques d'un processus de formage ; et destinée à la comparaison de l'indicateur (11, 12, 13) du processus de formage qui a été identifié à au moins un indicateur d'un processus de formage de référence ou à une plage d'indicateurs de processus de formage de référence et au déclenchement d'un affichage lorsque la comparaison révèle un décalage ou un décalage qui correspond à une valeur seuil qui a été prédéfinie.

14. Unité d'analyse selon la revendication 13, dans laquelle l'unité d'analyse est réalisée à l'état intégré dans une commande de servo-presse.

15. Unité d'analyse selon la revendication 13 ou 14, qui est conçue en outre pour la mise en œuvre du procédé en conformité avec l'une quelconque des revendications 2 à 12.

16. Unité d'analyse selon l'une quelconque des revendications 13 à 15, qui présente en outre une unité d'affichage destinée à l'affichage d'un décalage qui a été identifié, de l'indicateur (11, 12, 13) du processus de formage qui a été identifié, par rapport à un indicateur d'un processus de formage de référence ou à une plage d'indicateurs de processus de formage de référence.

17. Unité d'analyse selon l'une quelconque des revendications 13 à 16, qui comprend une interface destinée à un dispositif périphérique ou un service cloud à des fins de l'émission d'indicateurs (11, 12, 13) de processus de formage qui ont été identifiés ou d'indicateurs de processus de formage qui ont été identifiés et d'indicateurs de servo-presses ou de matériels ou de processus associés et/ou à des fins de la réception d'indicateurs de processus de formage de référence ou de données de recommandation de manipulation qui ont été évaluées par un service cloud en se référant à des indicateurs de processus de formage envoyés, qui ont pu être identifiés.

18. Produit de programme informatique qui comprend un programme informatique qui présente des moyens destinés à la mise en œuvre du procédé selon l'une quelconque des revendications 1 à 12, lorsque le programme informatique est appliqué à des fins d'exécution sur un mécanisme commandé par un programme.

FIG 1

## FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013105468 A1